(19) **Europäisches Patentamt**
**European Patent Office**
**Office européen des brevets**

(11) **EP 3 218 769 B1**

(12) **FASCICULE DE BREVET EUROPEEN**

(45) Date de publication et mention
de la délivrance du brevet:
**20.03.2019 Bulletin 2019/12**

(21) Numéro de dépôt: **15801133.8**

(22) Date de dépôt: **13.11.2015**

(51) Int Cl.:
***G03H 1/04*** (2006.01)

(86) Numéro de dépôt international:
**PCT/EP2015/076530**

(87) Numéro de publication internationale:
**WO 2016/075279 (19.05.2016 Gazette 2016/20)**

(54) **PROCEDE D'ANALYSE COMPRENANT LA DETERMINATION HOLOGRAPHIQUE D'UNE POSITION D'UNE PARTICULE BIOLOGIQUE.**

ANALYSEVERFAHREN MIT HOLOGRAPHISCHER BESTIMMUNG EINER POSITION EINES BIOLOGISCHEN PARTIKELS

ANALYSIS METHOD INCLUDING THE HOLOGRAPHIC DETERMINATION OF A POSITION OF A BIOLOGICAL PARTICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2014 FR 1460947**

(43) Date de publication de la demande:
**20.09.2017 Bulletin 2017/38**

(73) Titulaires:
• **Commissariat à l'Énergie Atomique et aux Énergies Alternatives 75015 Paris (FR)**
• **Biomérieux 69280 Marcy l'Étoile (FR)**

(72) Inventeurs:
• **PERRAUT, François 38134 Saint-joseph De Riviere (FR)**
• **JOLY, Pierre 38100 Grenoble (FR)**
• **JOSSO, Quentin 69007 Lyon (FR)**
• **KLOSTER-LANDSBERG, Meike 82166 Grafelfing (DE)**

(74) Mandataire: **Brevalex 95, rue d'Amsterdam 75378 Paris Cedex 8 (FR)**

(56) Documents cités:

• **YONG-SEOK CHOI ET AL: "Three-dimensional volumetric measurement of red blood cell motion using digital holographic microscopy", APPLIED OPTICS, OPTICAL SOCIETY OF AMERICA, WASHINGTON, DC; US, vol. 48, no. 16, 1 juin 2009 (2009-06-01), pages 2983-2990, XP001524402, ISSN: 0003-6935, DOI: 10.1364/AO.48.002983**
• **PAN G ET AL: "DIGITAL HOLOGRAPHY OF PARTICLE FIELDS: RECONSTRUCTION BY USE OF COMPLEX AMPLITUDE", APPLIED OPTICS, OPTICAL SOCIETY OF AMERICA, WASHINGTON, DC; US, vol. 42, no. 5, 10 février 2003 (2003-02-10), pages 827-833, XP001160042, ISSN: 0003-6935, DOI: 10.1364/AO.42.000827**
• **PAVILLON NICOLAS ET AL: "Cell Optical Density and Molecular Composition Revealed by Simultaneous Multimodal Label-Free Imaging", BIOPHYSICAL JOURNAL, vol. 105, no. 5, septembre 2013 (2013-09), pages 1123-1132, XP028712247, ISSN: 0006-3495, DOI: 10.1016/J.BPJ.2013.07.031**
• **W. XU ET AL: "Digital In-Line Holography of Microspheres", APPLIED OPTICS, vol. 41, no. 25, 1 septembre 2002 (2002-09-01), page 5367, XP055086866, ISSN: 0003-6935, DOI: 10.1364/AO.41.005367**

- **JACOB P FUGAL ET AL: "Practical methods for automated reconstruction and characterization of particles in digital in-line holograms; Practical methods for automated digital particle hologram analysis", MEASUREMENT SCIENCE AND TECHNOLOGY, IOP, BRISTOL, GB, vol. 20, no. 7, 1 juillet 2009 (2009-07-01), page 75501, XP020160483, ISSN: 0957-0233**

## Description

### DOMAINE TECHNIQUE

La présente invention concerne le domaine de l'analyse d'un échantillon recevant des particules biologiques, cette analyse consistant en particulier à déterminer une position d'au moins une desdites particules biologiques, selon un axe de la profondeur de l'échantillon.

### ÉTAT DE LA TECHNIQUE ANTÉRIEURE

On connaît dans l'art antérieur de nombreux cas dans lesquels il est nécessaire de connaître la position d'une particule biologique, selon l'axe de la profondeur de l'échantillon recevant cette particule.

Une solution couramment utilisée consiste à acquérir une série d'images de l'échantillon, à différentes profondeurs dans celui-ci. On recherche ensuite l'image sur laquelle on observe une image nette de la particule biologique.

Un inconvénient de cette solution est qu'elle ne permet pas de connaître la position d'une particule biologique transparente dont l'image nette se confond avec l'image du milieu environnant.

Un objectif de la présente invention est de proposer un procédé et un dispositif ne présentant pas cet inconvénient.

En particulier, un objectif de la présente invention est de proposer un procédé et un dispositif permettant de déterminer la position de n'importe quelle particule biologique, selon au moins un axe de l'espace à trois dimensions il est à noter que la publication "Three-dimensional volumetric measurement of red blood cell motion using digital holographie microscopy", YONG-SEOK CHOI ET AL, APPLIED OPTICS, vol. 48, no. 16, 1 juin 2009, pages 2983-2990, décrit une méthode pour localiser avec précision des particules biologiques par holographie numérique.

### EXPOSÉ DE L'INVENTION

Cet objectif est atteint avec un procédé d'analyse d'un échantillon tel que décrit dans la revendication 1.

L'invention permet de connaître avec précision une distance entre le plan de mise au point et ledit point de repère. On peut ainsi connaître avec précision une distance entre la particule d'intérêt et le plan de mise au point, ce qui permet ensuite de positionner au mieux un dispositif d'analyse pour étudier la particule d'intérêt.

D'autres caractéristiques du procédé selon l'invention, optionnelles, sont définies dans les revendications 2 à 14.

La région illuminée peut comprendre une pluralité de particules biologiques.

La première source lumineuse présente typiquement une largeur spectrale inférieure à 200 nm.

L'invention concerne également un dispositif d'analyse d'un échantillon, tel que décrit dans la revendication 15.

Le laser est notamment adapté à fournir un faisceau laser aligné avec l'axe optique du système optique, et couplé au système optique de sorte que le point de focalisation du faisceau laser correspond au plan de mise au point.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre un dispositif d'analyse, utile à la compréhension de l'invention ;
- la figure 2 illustre de manière schématique un procédé d'analyse, utile à la compréhension l'invention ;
- la figure 3 illustre un premier mode de réalisation d'un dispositif d'analyse selon l'invention ;
- la figure 4 illustre de manière schématique un détail d'un premier mode de réalisation d'un procédé d'analyse selon l'invention ;
- les figures 5A à 5C illustrent un détail du procédé illustré en figure 4 ;
- la figure 6 illustre une image de référence selon l'invention ;
- la figure 7 illustre de manière schématique un détail d'un deuxième mode de réalisation d'un procédé d'analyse selon l'invention ; et
- la figure 8 illustre un profil utilisé dans un troisième mode de réalisation de procédé selon l'invention.

### EXPOSÉ DÉTAILLÉ DE MODES DE RÉALISATION PARTICULIERS

Le procédé d'analyse et le dispositif d'analyse selon l'invention seront décrits conjointement, le dispositif d'analyse selon l'invention étant adapté à la mise en oeuvre du procédé d'analyse selon l'invention.

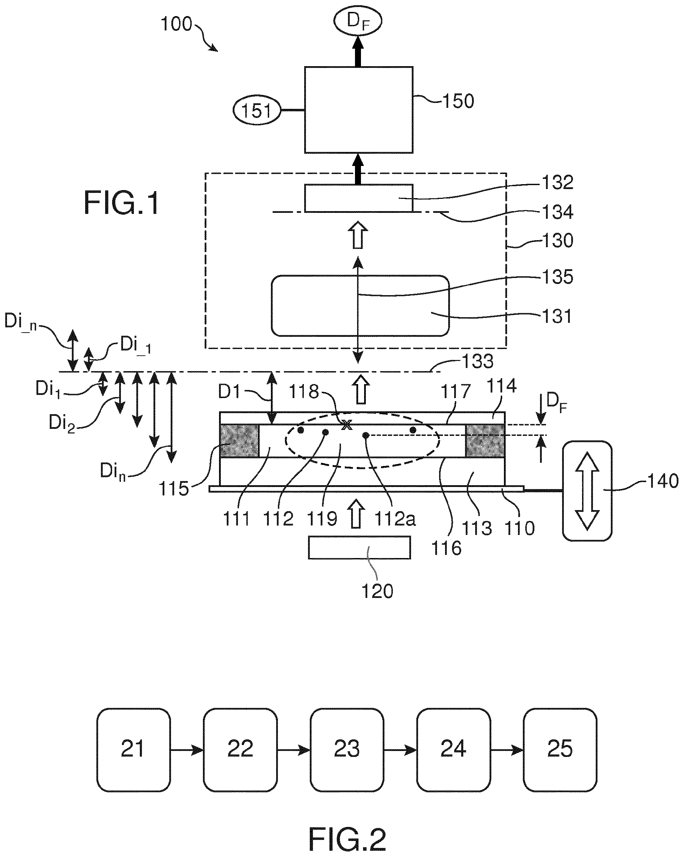

La figure 1 illustre un dispositif d'analyse 100, utile à la compréhension de l'invention. La figure 2 illustre un procédé d'analyse, utile à la compréhension de l'invention, et mis en oeuvre dans le dispositif d'analyse 100.

Le dispositif d'analyse 100 comprend un support 110, adapté à recevoir un échantillon 111.

Le support 110 est par exemple une pince, ou un plateau transparent, ou un plateau percé d'une ouverture pour laisser passer des rayons lumineux.

L'échantillon 111 est un milieu transparent ou translucide, c'est-à-dire présentant un coefficient de transmission supérieur ou égal à 70% dans le spectre visible ou plus généralement dans un spectre compris entre 300 nm et 1000 nm.

L'échantillon 111 est délimité par des interfaces, ou frontières, ou limites entre l'échantillon et un milieu situé à son contact direct.

L'échantillon consiste en un liquide tel que de l'eau, une solution tampon, un liquide comprenant un réactif, un milieu de culture, et des particules biologiques 112 situées dans ce liquide. En variante, l'échantillon consiste en un milieu solide tel qu'une gélose, et des particules biologiques situées sur ce milieu solide. Selon une autre variante, l'échantillon consiste en un gaz dans lequel se trouvent des particules biologiques. Ainsi, les particules biologiques peuvent être situées à l'intérieur de l'échantillon (par exemple baigner dans un liquide), ou affleurer en surface de l'échantillon (par exemple être situées sur une gélose).

Les particules biologiques 112 désignent par exemple des bactéries, des spores, des cellules, des levures, ou tout type de micro-organisme. L'une de ces particules biologiques est nommée particule d'intérêt 112A.

Dans l'exemple représenté en figure 1, l'échantillon 111 comprend un milieu de culture enfermé dans une chambre fluidique délimitée par une lame inférieure 113, par exemple une lame de microscope standard, une lame supérieure 114, et un adhésif 115 entourant latéralement l'échantillon 111 et reliant ensemble les lames supérieure et inférieure. Les lames supérieure et inférieure 113, 114 sont transparentes dans le visible et le cas échéant d'autres longueurs d'ondes utiles.

La frontière entre l'échantillon et la lame inférieure 113 définit une interface inférieure 116 de l'échantillon 111. La frontière entre la lame supérieure 114 et l'échantillon définit une interface supérieure 117 de l'échantillon 111.

Une première source lumineuse 120 se trouve en amont de l'échantillon 111, dans le sens de propagation de la lumière, depuis la première source lumineuse vers l'échantillon 111. Dans la suite, les termes amont et aval se réfèrent au sens de propagation de la lumière, depuis la première source lumineuse 120 vers l'échantillon 111.

La première source lumineuse 120 est par exemple un laser, une diode électroluminescente, une lampe blanche notamment une lampe à vapeur de mercure filtrée ou non. La première source lumineuse peut comprendre une fibre optique pour amener la lumière sous la lame inférieure 113.

La première source lumineuse 120 est avantageusement temporellement cohérente. Elle présente une largeur spectrale avantageusement inférieure à 200 nm, voire inférieure à 100 nm ou même 25 nm.

De préférence, la première source lumineuse 120 est spatialement cohérente.

On donnera dans la suite plus de détails sur la cohérence spatiale et temporelle de la première source lumineuse 120.

La première source lumineuse illumine en transmission une région 119 de l'échantillon. La particule d'intérêt 112A se trouve dans la région 119.

Un ensemble d'imagerie 130 est situé en-aval de la lame supérieure 114, dans le sens de propagation de la lumière, depuis la première source lumineuse vers l'échantillon 111. Dans l'exemple décrit, l'ensemble d'imagerie 130 se trouve au-dessus de l'échantillon 111.

L'ensemble d'imagerie 130 comprend un système optique 131 et un capteur 132.

Le système optique 131 consiste par exemple en un objectif, notamment un objectif de microscope. Il présente un plan objet 133, nommé également plan de mise au point, et un plan image 134. Le plan image 134 est le conjugué (ou image) du plan de mise au point par le système optique. En d'autres termes, un objet situé dans le plan de mise au point correspond à une image nette dans le plan image.

Le capteur 132 est par exemple un capteur matriciel de type CCD ou CMOS. Il est situé dans le plan image 134. Ainsi, le capteur 132 acquiert une image en transmission, d'une partie du plan de mise au point 133.

Dans une configuration plan-infini, le plan de mise au point est le plan focal objet du système optique, et le plan image est renvoyé à l'infini. Une optique de proximité, par exemple une lentille tube, permet de focaliser le plan image sur le capteur 132. Dans la suite du texte, le terme capteur 132 regroupe le capteur 132 et son optique de proximité.

Le système optique 131 présente un axe optique 135. L'axe optique est orthogonal au plan de mise au point et au plan image. L'axe optique 135 définit la profondeur de l'échantillon 111. Cet axe relie les interfaces inférieure et supérieure 116, 117 de l'échantillon 111. De préférence, l'axe optique 135 est sensiblement orthogonal aux interfaces inférieure et supérieure 116, 117. Le terme interface désigne une frontière de l'échantillon 111 étudié.

L'analyse au sens de l'invention comprend en particulier une détermination de la position de la particule d'intérêt 112A selon un axe parallèle à l'axe optique 135.

Le dispositif 100 comprend en outre des moyens de translation adaptés à déplacer l'ensemble d'imagerie 130 selon un axe parallèle à l'axe optique 135. Dans une configuration plan-infini telle que définie ci-avant, les moyens de translation peuvent ne déplacer que le système optique 131, le capteur 132 restant fixe. En variante, les moyens de translation 140 sont adaptés à déplacer le support 110 selon un axe parallèle à l'axe optique 135.

Selon un mode de réalisation, les moyens de translation 140 réalisent en outre des translations selon deux autres axes définissant un plan orthogonal à l'axe optique 135.

Le capteur 132 est relié à des moyens de calcul 150, en particulier un processeur ou un microprocesseur.

Le dispositif 100 est adapté à la mise en oeuvre du procédé illustré de façon schématique en figure 2.

Le procédé comprend une première étape 21, de détermination d'un point de repère 118. Cette étape consiste à choisir, ou définir le point de repère 118. Ce choix est généralement arbitraire.

Le point de repère est situé sur une première interface de l'échantillon 111, ou à une distance connue de cette première interface, cette distance étant définie selon l'axe optique 135.

En particulier, le point de repère est situé sur l'interface supérieure 117 ou inférieure 116. Dans l'exemple représenté en figure 1, le point de repère est situé sur l'interface supérieure 117 de l'échantillon.

Selon une variante non représentée, le point de repère ne se trouve pas directement sur une interface de l'échantillon, mais à une distance connue de celle-ci. Par exemple, le point de repère se trouve sur une face de la lame supérieure 114 opposée à l'échantillon, l'épaisseur de la lame supérieure 114 étant connue.

Dans le dispositif 100, les moyens de calcul 150 sont reliés à une mémoire 151 stockant une information relative au point de repère, en particulier la distance selon un axe parallèle à l'axe optique 135, entre ce point de repère et ladite première interface et éventuellement ses coordonnées dans un plan orthogonal à l'axe optique 135.

On illumine ensuite l'échantillon 111 à l'aide de la première source lumineuse 120, formant ainsi dans l'échantillon une région illuminée 119 telle que décrite ci-avant (étape 22).

Ensuite, on acquiert une image en transmission de la région illuminée 119, à l'aide de l'ensemble d'imagerie 130 (étape 23). Cette image est nommée image de référence. Lors de cette acquisition, le plan de mise au point 133 est situé à une distance connue D1 du point de repère 118, cette distance étant définie selon un axe parallèle à l'axe optique 135. La particule d'intérêt 112A se trouve hors du plan de mise au point 133. De préférence, lors de l'acquisition de l'image de référence, le plan de mise au point se trouve en dehors de l'échantillon 111. Par exemple, lorsque le point de repère 118 se trouve sur l'interface supérieure 117, le plan de mise au point est situé entre 5 $\mu$m et 1500 $\mu$m au-dessus ou en dessous (en amont ou en aval) du point de repère, de préférence entre 5 $\mu$m et 1000 $\mu$m, voire entre 5 $\mu$m et 800 $\mu$m. Là encore, la distance est définie selon un axe parallèle à l'axe optique 135.

D'une façon générale, lors de l'acquisition de l'image de référence, le plan de mise au point est situé à une distance supérieure à 2 $\mu$m, et de préférence supérieure à 5 $\mu$m, de préférence dans la plage [5 $\mu$m - 1500 $\mu$m] voire [5$\mu$m - 1000 $\mu$m], voire [5$\mu$m - 800$\mu$m] d'une interface délimitant l'échantillon 111. En variante, on dispose d'une information a priori quant à la position d'une particule. Le plan de mise au point est alors décalé, par rapport à cet a priori, d'une valeur telle que définie ci-dessus.

Dans l'exemple représenté sur la figure 1, un exemple d'information a priori est l'observation de particules biologiques adhérentes à une surface, par exemple la lame supérieure 114 délimitant l'échantillon 111. La connaissance de la position de la lame permet d'établir un a priori sur la position des particules, ces dernières étant adhérentes à la face 117 de cette lame adjacente de l'échantillon.

On dit que l'image de référence est l'image d'une partie de la région illuminée, car elle est formée par des rayons lumineux provenant de cette région illuminée. L'image de référence est un hologramme, formé par l'interférence de rayons lumineux provenant de la première source lumineuse et diffractés par une particule biologique de l'échantillon, avec des rayons lumineux provenant de la première source lumineuse 120 et ayant traversé l'échantillon sans être diffractés. L'image de référence comprend notamment un hologramme associé à la particule d'intérêt.

Dans le dispositif 100, les moyens de calcul 150 sont reliés au capteur 132 pour recevoir l'image de référence.

Dans une étape 24, on met en oeuvre une construction numérique d'une série d'images reconstruites. Chaque image reconstruite correspond à un décalage prédéterminé, le long de l'axe optique 135, du plan de mise au point relativement à la position du plan de mise au point associée à l'image de référence. Il s'agit de décalages virtuels, c'est-à-dire simulés par la construction numérique, et non pas mis en oeuvre physiquement. En d'autres termes, chaque image reconstruite est calculée en un plan de reconstruction, associé à un décalage prédéterminé par rapport au plan de mise au point. Plus précisément, chaque plan de reconstruction correspond à l'image, par le système optique, d'un plan objet décalé du plan de mise au point de ce décalage prédéterminé. On parle généralement de propagation numérique. Ces décalages sont notés $Di_1$, $Di_2$, ... $Di_n$, $Di_{-1}$, ... $Di_{-n}$. De préférence, les décalages s'étendent entre deux positions extrêmes vis-à-vis du plan de mise au point, ces deux positions extrêmes encadrant l'interface supérieure 117 et, de façon plus générale, le point d'intérêt. Ces décalages peuvent être répartis selon un pas régulier, notamment un pas compris entre 0,10 $\mu$m et 1 $\mu$m, par exemple 0,25 $\mu$m ou 0,20 $\mu$m. Ainsi, on reconstruit numériquement les images qui seraient acquises par le capteur 132 si le plan de mise au point se trouvait successivement aux distances $Di_1$, $Di_2$, ... $Di_n$, $Di_{-1}$, ... $Di_{-n}$ de la position du plan de mise au point associée à l'image de référence. L'image de référence est une image acquise expérimentalement, tandis que les images reconstruites forment des images construites par propagation numériques.

La différence entre les deux positions extrêmes associées à ces décalages dépend de l'échantillon 111 observé, et notamment de son épaisseur. Lorsqu'on ne dispose d'aucun a priori quant à la position des particules d'intérêt, les deux positions extrêmes sont déterminées de telle sorte qu'elles se situent de part et d'autre de l'échantillon 111. Lorsqu'on dispose d'un a priori sur la position d'une particule d'intérêt dans l'échantillon, les deux positions extrêmes sont établies pour être agencées de part et d'autre de cette position.

La reconstruction numérique utilise la transformée de Fourier de l'image de référence (ayant éventuellement subi un traitement préalable), à laquelle on applique un opérateur de propagation avant de la repasser dans l'espace réel. L'opérateur de propagation est une fonction du décalage associé à l'image reconstruite calculée.

Selon l'invention, l'opérateur de propagation est par exemple une intégrale basée sur l'équation de Rayleigh Sommerfeld.

Dans l'article « 3D Localization of weak scatterers in digital holographie microscopy using Rayleigh-Sommerfeld back-propagation », 16 July 2012 / Vol. 20, No 15 / OPTICS EXPRESS, 16735-16744, Wilson *et al.* décrit un exemple d'une propagation numérique mise en oeuvre à partir de l'image d'une microsphère. Un autre exemple de propagation numérique est décrit par Lee et al. dans l'article « Holographie microscopy of holographically trapped three-dimensinal structures », 19 February 2007 / Vol. 15, No. 4 / OPTICS EXPRESS 1505-1512.

Les images reconstruites sont des images complexes, c'est-à-dire avec une partie réelle et une partie imaginaire. Elles comprennent un ensemble de points, chaque point de l'image étant affecté d'une grandeur complexe.

Les moyens de calcul 150 du dispositif 100 selon l'invention sont adaptés à réaliser, à partir de l'image de référence une construction numérique d'une série d'images reconstruites, telle que décrite ci-dessus.

On détermine ensuite, à partir de la série d'images reconstruites, la distance entre la particule d'intérêt 112A et le point de repère 118, cette distance étant définie selon un axe parallèle à l'axe 135 (étape 25). En variante, on se limite, à partir de la série d'images reconstruites, à la distance $D_{ref}$ entre la particule d'intérêt 112A et le plan de mise au point 133.

Pour cela, on calcule la distance $D_{ref}$ selon l'axe optique 135, entre la particule d'intérêt 112A, et le plan de mise au point associé à l'image de référence. Connaissant la distance $D_1$ selon l'axe optique 135 entre ce plan de mise au point et le point de repère 118, on en déduit la distance $D_F$ entre la particule d'intérêt 112A et le point de repère 118 selon l'axe optique 135.

Pour déterminer la distance $D_{ref}$ selon l'axe optique 135, entre la particule d'intérêt 112A, et le plan de mise au point associé à l'image de référence, on associe chaque image reconstruite à une valeur d'un paramètre utile, le paramètre utile étant fonction d'un paramètre de l'intensité complexe (ou amplitude complexe) des points appartenant aux images reconstruites. Un paramètre de l'intensité complexe (ou amplitude complexe) d'une image reconstruite est par exemple la partie imaginaire, la partie réelle, le module ou la phase de l'image reconstruite. De préférence, ces valeurs du paramètre utile sont réunies sous la forme d'un profil, représentant la valeur du paramètre utile en fonction du décalage de chaque image reconstruite, selon l'axe optique 135 par rapport au plan de mise au point 133.

Ensuite, on recherche une valeur remarquable sur ce profil, par exemple un maximum ou un point d'inflexion ou un passage par zéro. Cette valeur remarquable est associée au décalage selon l'axe optique 135, entre la particule d'intérêt et la position du plan de mise au point 133 associé à l'image de référence. De préférence, on fait en sorte que la valeur remarquable à rechercher soit un maximum et de façon générale un extremum, pour limiter l'effet de l'incertitude lors du passage par une dérivée seconde (détection d'un point d'inflexion), et pour s'affranchir d'une correction des biais de mesure (détection d'un passage par zéro). Mais la valeur remarquable du paramètre utile peut également être un passage par zéro de la fonction décrivant l'évolution de ce paramètre en fonction du décalage entre l'image reconstruite et le plan de mise au point 133, ou un point d'inflexion de cette fonction, ou tout autre critère.

Ainsi, de façon générale, on détermine la distance $D_{ref}$ entre le plan de mise au point 133 de l'image de référence et une particule d'intérêt 112A, par la succession des étapes suivantes :

- identification, sur l'image de référence, d'un hologramme associé à ladite particule d'intérêt,
- reconstruction numérique d'images, en appliquant un opérateur de propagation à ladite image de référence, ou à une région d'intérêt de l'image de référence comportant ledit hologramme, de façon à obtenir, pour une pluralité de décalages $Di_1$, $Di_2$, ... $Di_n$, $Di_{-1}$, ... $Di_{-n}$ prédéterminés par rapport au plan de mise au point 133, une image reconstruite, chaque image reconstruite correspondant à chaque décalage,
- extraction, sur chaque image reconstruite, d'un paramètre représentatif de la valeur complexe de chaque point de l'image, dit paramètre utile,
- analyse de l'évolution de ce paramètre utile en fonction dudit décalage et identification d'une valeur remarquable de ce paramètre utile,
- détermination du décalage correspondant à ladite valeur remarquable de ce paramètre utile, la distance $D_{ref}$ entre la particule d'intérêt 112A et le plan de mise au point 133 étant alors considérée comme égale à ce décalage.

Connaissant la distance $D_1$ entre le plan de mise au point 133 et le point de repère 118, il est alors possible de déduire la distance $D_F$ entre la particule d'intérêt 112A et le point de repère 118, par l'opération $D_F = D_{ref} - D_1$

Par extraction, sur chaque image reconstruite, d'un paramètre utile, on entend le calcul d'un paramètre représentatif des différents points constituant l'image, par exemple en effectuant une somme ou une moyenne des grandeurs complexes associées à chacun de ces points.

Le paramètre utile peut être le carré de la partie imaginaire de l'image, déterminé à partir de la valeur de la partie imaginaire des différents points constituant l'image. Le paramètre utile correspond alors à la moyenne du carré de la partie imaginaire de l'ensemble des points constituant l'image. Les inventeurs ont constaté qu'un tel paramètre permettait d'obtenir une bonne précision de localisation.

Outre la partie imaginaire, le paramètre peut également comprendre la valeur de la partie réelle des points constituant l'image ou leur module, ou le carré de ces différentes grandeurs. Les inventeurs ont montré qu'il est possible de localiser la position, selon l'axe optique 135, d'une particule d'intérêt 112A, cette position correspondant à une valeur remarquable du paramètre utile, et par exemple :

    u n maximum : c'est le cas lorsqu'on observe l'évolution, selon l'axe optique 135, du carré de la partie imaginaire, ou du module, ou du module au carré de l'image.

    u n passage par zéro, par exemple lorsqu'on observe l'évolution, selon l'axe optique 135, de la partie réelle de l'image ou de son carré.

De façon alternative ou complémentaire, l'identification d'une valeur remarquable dudit paramètre d'intérêt permet de conclure à la présence d'une particule d'intérêt 112A dans le milieu, dans la plage de décalage considérée, la distance entre la particule d'intérêt 112A et le plan de mise au point $D_{ref}$ n'étant pas forcément mémorisée.

A chaque particule d'intérêt 112A correspond un hologramme sur l'image de référence. Il est alors possible de sélectionner une région d'intérêt se limitant à un hologramme, et d'appliquer les étapes précédemment décrites à chaque région d'intérêt associé à un hologramme.

Les moyens de calcul 150 fournissent en sortie la distance $D_F$, selon l'axe 135, entre la particule d'intérêt 112A et le point de repère 118.

Le recours à une propagation numérique permet de réduire le nombre d'images de l'échantillon à acquérir. En particulier, l'acquisition d'une unique image est suffisante. Le procédé est donc particulièrement rapide et automatisable.

Dans certains cas, lorsque la particule d'intérêt se trouve dans le plan de mise au point du système optique, son image ne peut pas être distinguée de l'image du milieu environnant (le milieu environnant correspondant à la portion d'échantillon 111 entourant la particule d'intérêt). C'est par exemple le cas lorsque la particule d'intérêt baigne dans un milieu de même coefficient de transmission ou d'indice de réfraction voisin (par exemple à 20% près), dans le spectre de la première source lumineuse. Dans ce cas, le procédé selon l'art antérieur tel que décrit en introduction ne permet pas de déterminer la position de la particule d'intérêt. En revanche, on pourra identifier la particule d'intérêt sur une image reconstruite selon le procédé de la figure 2, car cette image reconstruite est une image complexe contenant plus d'information qu'une image acquise. Ainsi, le procédé décrit en référence à la figure 2 permet de déterminer la position d'une particule selon un axe parallèle à l'axe optique du système optique, même lorsque la particule ne peut être distinguée de son milieu environnant sur une image acquise lorsque la particule se trouve dans le plan de mise au point du système optique.

Enfin, le procédé décrit en référence à la figure 2 permet d'associer une image et une position du plan de mise au point selon l'axe optique 135, cette position étant déterminée avec une grande précision (liée au pas des décalages mis en oeuvre à l'étape 23). Une telle précision ne serait pas facilement atteignable à l'aide de décalages physiques, et non virtuels.

L'image de référence peut comprendre l'hologramme d'une unique particule biologique, qui définit alors la particule d'intérêt selon l'invention.

En variante, l'image de référence comprend l'hologramme de plusieurs particules biologiques, on choisit arbitrairement l'un de ces hologrammes pour définir la particule d'intérêt selon l'invention, et on utilise des portions des images reconstruites, ou régions d'intérêt, centrées sur l'un de ces hologrammes.

On peut mettre en oeuvre une étape préliminaire de normalisation de l'image de référence. Pour cela, on acquiert une image dite de fond, représentative des défauts du système optique (réflexions internes, poussières, etc.). L'image de fond correspond par exemple à l'image acquise en déplaçant l'échantillon dans un plan parallèle au plan de mise au point, pendant la prise d'image. En variante, l'image de fond est une image moyenne formée à partir de plusieurs images statiques obtenues pour plusieurs positions de l'échantillon dans un plan parallèle au plan de mise au point. Ensuite, on divise, pixel par pixel, l'image de référence par l'image de fond. On obtient ainsi une image de référence normalisée Une telle normalisation améliore les résultats de la méthode.

Selon une première variante, on réalise la propagation numérique à partir de l'image de référence utilisée directement, ou à partir de l'image de référence normalisée telle que définie ci-dessus.

L'image reconstruite associée à un décalage z est notée :

$$U_p(z) = TF^{-1}\{TF(U_0)\, X\, H(z)\}$$

avec $U_0$ l'image utilisée pour réaliser la propagation numérique (ici l'image de référence ou l'image de référence normalisée), *TF* l'opérateur transformée de Fourier, *TF$^{-1}$* l'opérateur transformée de Fourier inverse, *X* la multiplication terme à terme de matrices, et *H* un opérateur de propagation basé sur l'intégrale de Rayleigh Sommerfeld.

Dans l'exemple présenté ici, on a en particulier :

$$H(u,v,z) = exp\Big[-|z| * Im\big(p(u,v)\big) + i * z * Re(p(u,v))\Big]$$

avec

- *Re* l'opérateur partie réelle, *Im* l'opérateur partie imaginaire, $i^2 = -1$,
- *u* et *v* les coordonnées dans l'espace de Fourier, associées aux coordonnées x, y un plan orthogonal à l'axe 135, dans l'espace réel,
- $p(u,v) = k \times \Delta_p \times \left(\sqrt{1 - u^2 - v^2} - 1\right)$, et $k = \dfrac{2\pi}{\lambda}$.

Les coordonnées *u* et *v* sont définies de la façon suivante :

$$u = \frac{\lambda}{\Delta_p}\left(\frac{0}{N_x} - \frac{1}{2}\right); \frac{\lambda}{\Delta_p}\left(\frac{1}{N_x} - \frac{1}{2}\right); \dots; \frac{\lambda}{\Delta_p}\left(\frac{N_x - 1}{N_x} - \frac{1}{2}\right) \text{ par pas de } \frac{\lambda}{N_x \times \Delta_p}$$

$$v = \frac{\lambda}{\Delta_p}\left(\frac{0}{N_y} - \frac{1}{2}\right); \frac{\lambda}{\Delta_p}\left(\frac{1}{N_y} - \frac{1}{2}\right); \dots; \frac{\lambda}{\Delta_p}\left(\frac{N_y - 1}{N_y} - \frac{1}{2}\right) \text{ par pas de } \frac{\lambda}{N_y \times \Delta_p}$$

et avec

- $\Delta_p$ la taille du pas d'échantillonnage, défini dans le plan de mise au point (donc lié au pas de pixel du capteur 132 et au facteur de grandissement du système optique 131),
- $N_x$ et $N_y$ les nombres de pixels selon x, respectivement y, dans l'image $U_0$,
- $\lambda$ la longueur d'onde centrale de la première source lumineuse.

On détermine ensuite la position de la particule d'intérêt selon l'axe optique du système optique, à partir de la partie imaginaire de chaque image reconstruite $U_p(z)$. En particulier, on recherche l'image reconstruite ou une portion d'image reconstruite, dont le carré de la partie imaginaire (c'est-à-dire la valeur moyenne du carré de la partie imaginaire des différents points composant l'image) est maximum. Une portion d'image reconstruite est une partie d'une image reconstruite, centrée sur l'image de la particule d'intérêt. Si l'image de référence se rapporte à plusieurs particules biologiques, on peut utiliser la même image de référence pour déterminer la position de chacune de ces particules biologiques, en utilisant à chaque fois des images reconstruites centrées sur une particule biologique différente.

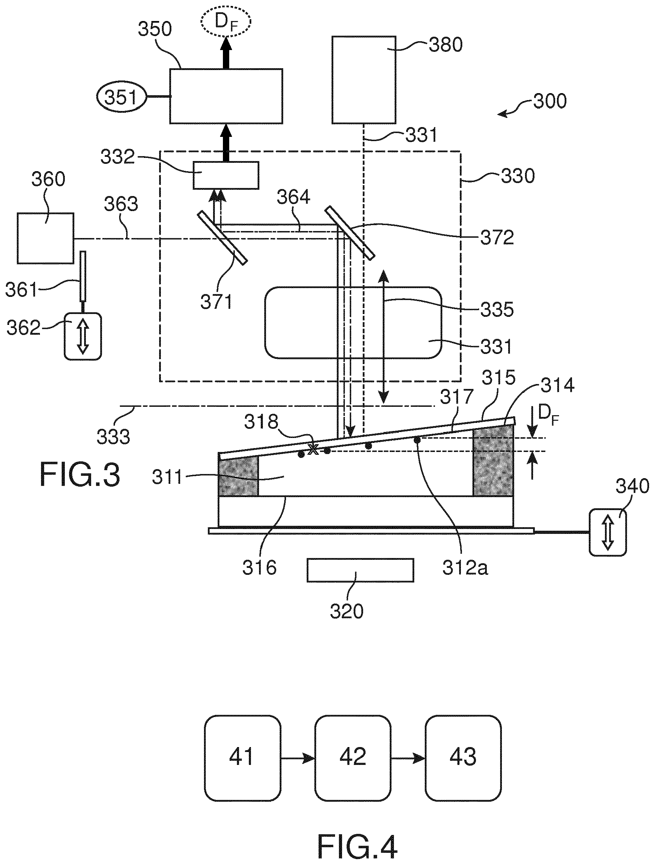

On va maintenant décrire, en référence aux figures 3 et 4, un premier mode de réalisation de procédé et de dispositif 300 selon l'invention. La figure 3 ne sera décrite que pour ses différences relativement à la figure 1.

Les références numériques 111, 120, 112A, 116, 117,118, 130, 131, 132, 135, 120, 150, 151 de la figure 1 correspondent respectivement aux références numériques 311, 320, 312A, 316, 317, 318, 330, 331, 332, 335, 320, 350, 351 de la figure 3.

Chacune des caractéristiques distinguant le dispositif selon la figure 3 du dispositif selon la figure 1 pourra être isolée et combinée indépendamment au dispositif de la figure 1 pour former de nombreuses autres variantes de l'invention.

Selon un mode de réalisation avantageux tel que représenté en figure 3, les particules biologiques adhèrent directement sur une deuxième interface de l'échantillon.

La droite parallèle à l'axe 335 et passant par le point de repère 318 traverse cette deuxième interface.

Cette deuxième interface est avantageusement confondue avec la première interface telle que définie ci-avant. Dans le cas contraire, on connaît de préférence la position de la première interface relativement à la deuxième interface, selon un axe parallèle à l'axe optique 135. En particulier, cette position s'étendant selon un axe parallèle à l'axe optique 135 et passant par le point de repère 318.

On dispose ainsi d'une connaissance *a priori* sur la position, selon l'axe optique 335, du point de repère 318 relativement aux particules biologiques.

La deuxième interface est sensiblement orthogonale à l'axe 335. Il s'agit en particulier de l'interface inférieure ou supérieure 316, 317 de l'échantillon.

En pratique, on étudie par exemple :

- une gélose, les particules biologiques s'étendant sur la face supérieure de celle-ci, ou
- des particules biologiques qui adhèrent naturellement sur une lame recouvrant l'échantillon, ladite lame étant située au-dessus de l'échantillon.

Dans l'exemple représenté en figure 3, les particules biologiques adhèrent sur l'interface supérieure 317.

L'interface supérieure est légèrement inclinée relativement à un plan orthogonal à l'axe 335, typiquement d'un angle inférieur à 0,1 rad, voire même 0,05 rad ou 0,02 rad.

Le procédé selon l'invention permet de s'affranchir de l'incertitude sur le positionnement des particules biologiques selon l'axe 335, lorsque la lame supérieure, définissant l'interface supérieure de l'échantillon, est inclinée relativement à un plan orthogonal à l'axe 335.

Plus généralement, le procédé selon l'invention permet de s'affranchir de l'incertitude sur le positionnement des particules biologiques selon l'axe 335, lorsque la lame supérieure, définissant l'interface supérieure de l'échantillon, est déformée relativement à un plan orthogonal à l'axe 335. Cette déformation peut désigner toute déformation telle que les particules biologiques adhérant sur ladite deuxième interface soient situées à l'intérieur d'un cylindre délimité par deux surfaces planes perpendiculaires à l'axe optique 335 et distantes de moins de 100 $\mu$m selon cet axe, voire moins de 50 $\mu$m.

De préférence, la distance selon un axe parallèle à l'axe optique 335, entre la position du plan de mise au point associée à l'image de référence, et la projection du point de repère 318 selon cet axe et sur la deuxième interface, est comprise entre +5 $\mu$m et +1500 $\mu$m ou entre -5 $\mu$m et -1500 $\mu$m. Avantageusement, cette distance est comprise entre + 5 $\mu$m et +1000 $\mu$m ou - 5 $\mu$m et -1000 $\mu$m, voire entre + 5 $\mu$m et +800 $\mu$m ou - 5 $\mu$m et -800 $\mu$m, ou même entre + 5 $\mu$m et +200 $\mu$m ou - 5 $\mu$m et -200 $\mu$m. On définit ainsi des plages de défocalisation optimale, offrant un calcul plus aisé de la distance entre la particule d'intérêt et le point de repère.

Puisque les particules biologiques adhèrent sur ladite deuxième interface et sont situées dans un cylindre de hauteur limitée, on s'assure facilement que lors de l'acquisition de l'image de référence, la particule d'intérêt se trouve à une distance du plan de mise au point située dans une plage de défocalisation optimale.

La largeur des plages de défocalisation optimale peut dépendre des caractéristiques de la première source lumineuse 320, notamment sa cohérence spatiale et temporelle.

Ainsi, on pourra adapter la première source lumineuse en fonction d'une distance selon l'axe optique 335, entre plusieurs particules d'intérêt que l'on souhaite étudier, de sorte que ces particules d'intérêt se trouvent simultanément dans une plage de défocalisation optimale.

Par exemple, on peut utiliser une source de lumière blanche, pour une plage de défocalisation optimale allant + 5 $\mu$m à +200 $\mu$m, et de -5 $\mu$m à -200 $\mu$m. Plus on restreint la largeur spectrale de la première source lumineuse, plus la largeur de la plage de défocalisation optimale augmente.

En outre, plus le diamètre apparent de la première source lumineuse 320 est faible, plus la plage de défocalisation optimale est large.

Dans l'exemple représenté en figure 3, le dispositif d'analyse 300 comprend des moyens pour déterminer la distance, selon un axe parallèle à l'axe optique 335, entre le point de repère et la position du plan de mise au point du système optique associée à l'image de référence. Cette distance est nommée distance utile.

Ces moyens comprennent en particulier un laser 360, adapté à illuminer le point de repère 318. Un obturateur 361 relié à une platine de translation 362 permet d'obturer la sortie du laser, lorsque l'on ne souhaite pas que le faisceau laser 363 illumine le point de repère 318.

Le faisceau laser 363 est avantageusement incident sur le point de repère, selon un axe parallèle à l'axe optique 335.

Le faisceau laser 363 et le capteur d'image 332 sont optiquement couplés au même système optique 331, de telle sorte que le point de focalisation du faisceau laser correspond au plan objet du capteur, ou plan de mise au point.

Dans l'exemple représenté en figure 3, le point de repère se trouve sur l'interface supérieure 317, c'est pourquoi le faisceau laser 363 pénètre dans l'échantillon par cette interface supérieure 317.

Le faisceau laser 363 traverse une première lame séparatrice 371, puis est réfléchi sur une deuxième lame séparatrice 372, avant d'atteindre l'interface supérieure 317. Chaque lame séparatrice peut être une lame dichroïque. En variante, on utilise un cube ou un miroir semi-réfléchissant.

La distance utile est déterminée en mettant en oeuvre les sous-étapes suivantes illustrées en figure 4.

Dans une sous-étape 41, on illumine le point de repère 318 à l'aide du faisceau laser.

Ensuite, on ajuste la distance, notamment selon un axe parallèle à l'axe optique 335, entre l'échantillon, et le système optique 331, de sorte que le capteur 332 reçoive l'image d'une tache formée par la réflexion spéculaire du faisceau laser 363 sur le point de repère (sous-étape 42). Cet ajustement peut être réalisé grâce aux moyens de translation 340 décrits en référence à la figure 1.

En pratique, la définition du point de repère 318 peut dépendre de la position arbitraire du faisceau laser 363, dans un plan orthogonal à l'axe optique 335.

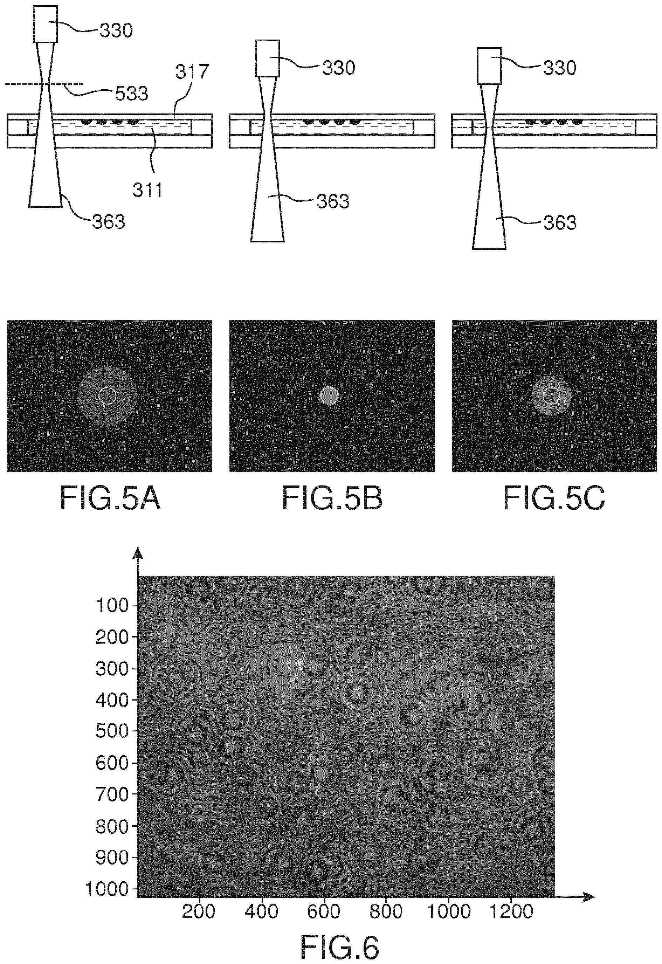

Cet ajustement met en oeuvre un repérage de la réflexion spéculaire du faisceau laser 363 sur la surface recevant le point de repère. Un exemple d'un tel ajustement est illustré sur les figures 5A à 5C, le point de repère étant situé sur l'interface supérieure 317.

L'image 5A correspond à une position du plan de mise au point 533 au-dessus de l'interface supérieure 317. L'image obtenue sur le capteur est une tache large et peu lumineuse.

L'image 5B correspond à une position du plan de mise au point sur l'interface supérieure 317. L'image obtenue sur le capteur est une tache étroite et très lumineuse.

L'image 5C correspond à une position du plan de mise au point au-dessous de l'interface supérieure 317. L'image obtenue sur le capteur est une tache large et peu lumineuse.

En déplaçant le système optique selon l'axe 335, on observe successivement :

- une tache large et peu lumineuse ;
- une première tâche étroite et très intense correspondant à la réflexion du faisceau laser 363 focalisé par le système optique 331 sur la face 315 de la lame supérieure 314, opposée à l'échantillon, cette tache présentant une intensité maximale ;
- une deuxième tache étroite et intense correspondant à la réflexion du faisceau laser 363 focalisé par le système optique 331 sur la face 317 de la lame supérieure 314, cette face étant adjacente de l'échantillon, et constituant alors une de ses interfaces, cette tache présentant un maximum secondaire de l'intensité, puis
- une tâche large et peu lumineuse, correspondant à la rétrodiffusion du faisceau laser dans l'échantillon 311.

Ainsi, l'analyse de l'évolution de l'intensité lumineuse du signal de réflexion spéculaire du faisceau laser, en fonction de l'écartement relatif entre le système optique 331 et l'échantillon 311 permet de déterminer la position du point de repère 318, ce dernier correspondant, dans cet exemple, au point de focalisation du faisceau laser avec une surface apte à réfléchir le faisceau, en l'occurrence la face 317 ou la face 315.

Dans l'exemple précédemment décrit, l'image de la réflexion spéculaire la plus intense et l'image de la réflexion spéculaire présentant un maximum secondaire d'intensité, correspondent aux configurations dans lesquelles le plan objet passe par l'intersection du faisceau laser et, respectivement, la face de la lame supérieure 314 opposée à l'échantillon, et la face de la lame supérieure 314 adjacente de l'échantillon.

On peut remarquer qu'il est particulièrement intéressant de repérer la réflexion du faisceau laser sur une face de la lame supérieure adjacente de l'échantillon, car elle sera visible même lorsque le système optique est formé par un objectif à immersion.

Ensuite, le procédé peut comprendre une sous-étape 43, consistant à déplacer d'une distance connue et selon l'axe optique 335, le support recevant l'échantillon relativement aux moyens d'imagerie. Là encore, on peut utiliser les moyens de translation tels que décrits en référence à la figure 1. Cette sous-étape peut être utile pour placer une particule d'intérêt dans une plage de défocalisation optimale telle que définie ci-avant.

On a représenté en figure 3 le faisceau laser 364 réfléchi sur l'interface supérieure 317, et imagé sur le capteur par le système optique 331. Le faisceau laser réfléchi 364 est réfléchi sur la deuxième lame séparatrice 372, puis sur la première lame séparatrice 371.

Les moyens de calcul 351 reçoivent en entrée une image acquise par le capteur 351, lorsque l'obturateur 361 est ouvert, et que la première source lumineuse 320 est éteinte. Ils pilotent les moyens de translation 340 pour mettre en oeuvre la sous-étape 42, et le cas échéant la sous-étape 43.

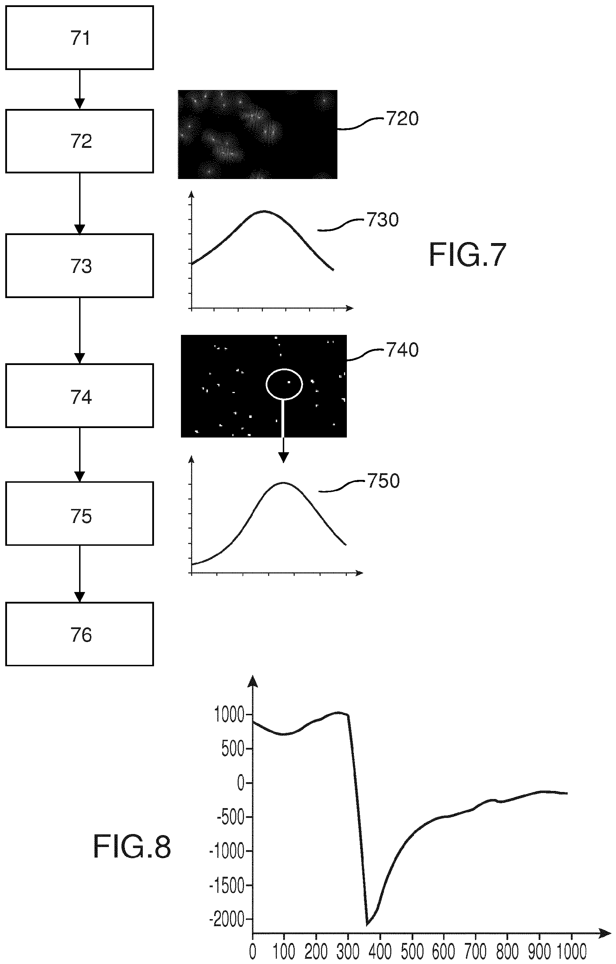

De préférence, le procédé selon l'invention comprend également une détermination, à partir de la série d'images reconstruites, de la position de la particule d'intérêt dans un plan orthogonal à l'axe optique du système optique. Un exemple d'une telle détermination sera décrit plus avant en référence à la figure 7.

Les moyens de translation 340 peuvent mettre en oeuvre une translation selon deux axes définissant ensemble un plan orthogonal à l'axe optique 335. On peut ainsi localiser successivement plusieurs particules d'intérêt d'un même échantillon. Après une unique étape de détermination d'un point de repère, on met en oeuvre plusieurs fois les séries d'étapes suivantes telles que décrites ci-avant :

- illumination d'une région de l'échantillon ;
- acquisition d'une image de référence ;
- construction numérique d'une série d'images reconstruites ; et

- détermination de la distance entre une particule d'intérêt et le point de repère, et/ou détection du nombre et de la position à partir de l'image de référence ou d'une ou plusieurs images reconstruites des particules d'intérêt.

Entre deux séries de ces étapes, on translate l'échantillon dans un plan orthogonal à l'axe optique 335.

La figure 3 permet également d'illustrer une étape supplémentaire d'analyse mise en oeuvre dans un procédé et un dispositif selon l'invention.

Le dispositif 300 comprend des moyens pour positionner le waist du faisceau laser 363 (ou col, c'est-à-dire emplacement du faisceau laser dont le diamètre est le plus étroit) sur la particule d'intérêt.

Le rayonnement émis par la particule d'intérêt, en réaction, est collecté par le système optique 331 et reçu par un spectromètre 380 qui analyse ce rayonnement. Le spectromètre 380 est par exemple un spectromètre analysant sur la diffusion Raman ou un spectromètre de fluorescence. Dans ce type d'analyse, il est préférable que le faisceau laser d'excitation soit centré sur la particule examinée. Cela évite une perturbation du spectre de diffusion Raman par le voisinage de la particule.

Le positionnement du waist du faisceau laser 363 est mis en oeuvre grâce à des moyens de translation tels qu'une platine de translation (non représentée), adaptés à déplacer l'échantillon relativement aux moyens d'imagerie 331. Ces moyens de translation peuvent être formés par les moyens de translation 340. Les moyens de translation sont pilotés par les moyens de calcul 350. Les moyens de calcul 350 utilisent la position de la particule d'intérêt relativement au point de repère pour positionner le plan de mise au point du système optique 331 sur la particule d'intérêt.

En particulier, les moyens d'imagerie sont déplacés par rapport à la particule d'intérêt pour focaliser un faisceau laser d'analyse dans un plan orthogonal à l'axe optique des moyens d'imagerie, ce plan recevant ladite particule d'intérêt, et le waist du faisceau laser d'analyse est déplacé dans ce plan de façon à le placer exactement sur la particule d'intérêt.

On pourra envisager tout autre type d'analyse nécessitant un positionnement précis du faisceau laser sur la particule d'intérêt. On pourra utiliser une source laser distincte du laser 360 pour analyser la particule d'intérêt.

De la même façon, un photodétecteur 332, optiquement couplé au système optique 331, peut être utilisé, par exemple pour recueillir un signal de fluorescence émis par la particule d'intérêt 112A en réponse à un signal d'excitation. La connaissance d'une des distances précédemment évoquées ($D_F$ ou Dref) permet la focalisation du système optique sur la particule, optimisant la collecte du signal de fluorescence par le photodétecteur 332.

Dans la plupart des cas, un milieu comporte une pluralité de particules d'intérêt. Durant une première phase, on détermine et on mémorise la distance $D_{ref}$ ou $D_F$ correspondant à chaque particule d'intérêt 112A de l'échantillon. Durant une deuxième phase, le positionnement relatif du système optique 331 est ajusté de telle sorte que le plan de mise au point de ce système optique comprenne la particule d'intérêt. Cet ajustement est réalisé, successivement, pour chaque particule d'intérêt, de manière à optimiser l'analyse.

La figure 6 illustre un exemple d'une image de référence selon l'invention. Les axes des abscisses et des ordonnées sont gradués en pixels. On distingue plusieurs figures de diffraction, associées chacune à une particule biologique.

On va maintenant décrire, en référence à la figure 7, un exemple détaillé des étapes mises en oeuvre pour déterminer, à partir d'une première série d'images reconstruites, la distance entre la particule d'intérêt et le point de repère, selon un axe parallèle à l'axe optique du système optique.

Dans l'exemple représenté, on se place dans le mode de réalisation tel que décrit ci-avant, dans lequel on a :

$$H(u, v, z) = exp\big[-|z| * Im\big(p(u,v)\big) + i * z * Re\big(p(u,v)\big)\big]$$

On met ensuite en oeuvre les sous-étapes suivantes :

• sous-étape 71 :

On calcule, pour chaque image reconstruite de la première série d'images reconstruites, le carré de la partie imaginaire. On obtient une première série d'images reconstruites dites utiles. Le carré de la partie imaginaire d'une image reconstruite définit donc l'intensité de l'image reconstruite utile correspondante.

• sous-étape 72 :

Chaque image reconstruite utile correspond à une même matrice de pixels. Selon l'image reconstruite utile, l'intensité associée à chaque pixel varie.

Pour chaque pixel, on sélectionne l'intensité maximale parmi les intensités sur les différentes images reconstruites utiles. On forme ainsi l'image des maxima.

De façon similaire, on forme l'image des minima.

On calcule ensuite une image des gradients 720, correspondant à la différence entre l'image des maxima et l'image des minima.

On peut réaliser cette étape à l'aide d'une première matrice, dont une dimension correspond aux pixels, et l'autre dimension correspond au décalage du plan de mise au point associé à l'image reconstruite utile. Ce décalage est mesuré selon l'axe optique du système optique, nommé axe (Oz) dans la suite.

Par exemple, si les images reconstruites utiles présentent chacune X pixels en largeur et Y pixels en hauteur, et qu'on reconstruit N images reconstruites utiles, la première matrice présente XY colonnes et N lignes.

L'image des minima correspond alors à une deuxième matrice XY colonnes et 1 ligne. L'image des maxima correspond à une troisième matrice XY colonnes et 1 ligne. L'image des gradients correspond une quatrième matrice XY colonnes et 1 ligne, égale à la différence entre la troisième et la deuxième matrices.

• sous-étape 73 :

On sélectionne les pixels présentant un fort gradient d'intensité selon l'axe (Oz). On définit un gradient moyen associé à ces pixels. La position des plus grandes valeurs de ce gradient moyen définit grossièrement la position des particules biologiques selon l'axe (Oz).

Pour ce faire, on peut sélectionner dans la quatrième matrice, les colonnes présentant les valeurs les plus élevées (par exemple premier percentile). On définit ainsi une série de M pixels. Ensuite, on sélectionne ces pixels dans la première matrice, et on combine (par exemple somme ou moyenne) les pixels sélectionnés associés à un même décalage selon l'axe (Oz). On forme ainsi une cinquième matrice N lignes et 1 colonne.

On recherche ensuite le maximum parmi les valeurs de cette cinquième matrice, et on relève le décalage selon l'axe (Oz), associé à ce maximum.

La figure 730 illustre la cinquième matrice sous la forme d'un profil dans lequel l'axe des abscisses est un décalage selon l'axe (Oz), et l'axe des ordonnées est la valeur correspondante dans la cinquième matrice.

La sous-étape 73 définit une position moyenne selon l'axe (Oz), de plusieurs particules biologiques imagées sur l'image de référence. Cette position moyenne définit une position approchée d'une particule d'intérêt selon l'invention, en supposant que les particules biologiques sont situées sensiblement dans un même plan orthogonal à l'axe (Oz).

On exploite un gradient selon l'axe (Oz) associé à une sélection de pixels présentant chacun un fort gradient selon cet axe. Le maximum du gradient associé à cette sélection est donc d'autant plus facile à repérer.

• sous-étape 74 :

On sélectionne parmi les images de la première série d'images reconstruites utiles, celle associée à la position selon l'axe (Oz), calculée à la sous-étape 73.

Sur cette image, on réalise un seuillage, pour obtenir une image binaire 740. Ensuite, on relève les coordonnées des objets binaires mis en évidence par le seuillage. On calcule ainsi une position approchée de chaque particule biologique, dans un plan orthogonal à l'axe (Oz). Cette étape peut comprendre une étape d'interpolation de chaque objet binaire par une ellipse, pour calculer en outre une forme géométrique approchée de chaque objet binaire, et donc de chaque particule biologique.

On choisit arbitrairement la particule d'intérêt en choisissant arbitrairement l'un des objets binaires. On a donc déterminé une position approchée de la particule d'intérêt, dans un plan orthogonal à l'axe (Oz).

On définit sur l'image binaire 740 une région d'intérêt comprenant ce seul objet binaire. La région d'intérêt est définie par des positions de pixels. La région d'intérêt est par exemple un carré de 16*16 pixels.

• sous-étape 75 :

On met en oeuvre cette étape à partir de la première série d'images reconstruites utiles, en sélectionnant dans chaque image reconstruite utile une région correspondant à la région d'intérêt telle que définie ci-avant.

En variante, on met en oeuvre cette étape à partir d'une deuxième série d'images reconstruites utiles. Chaque image de la deuxième série d'images reconstruites utiles est formée par le carré de la partie imaginaire d'une image d'une deuxième série d'images reconstruites.

La deuxième série d'images reconstruites est associée à un pas d'échantillonnage selon l'axe (Oz), inférieur au pas d'échantillonnage de la première série d'images reconstruites. Chaque image de la deuxième série d'images reconstruites correspond à la région d'intérêt telle que définie ci-avant. L'amplitude de la plage d'échantillonnage selon l'axe (Oz) associée à la deuxième série d'images reconstruites, est inférieure à l'amplitude de la plage d'échantillonnage associée à la première série d'images reconstruites. La deuxième série d'images reconstruites peut être calculée uniquement pour la recherche d'une position précise de la particule d'intérêt.

On met en oeuvre les sous-étapes 72, et 73 sur la deuxième série d'images reconstruites utiles, pour calculer une position précise de la particule d'intérêt, selon l'axe (Oz).

La figure 750 correspond à la figure 730, en remplaçant la première série d'images reconstruites utiles par la deuxième série d'images reconstruites utiles.

• sous-étape 76 :

On calcule une position précise de la particule d'intérêt, dans un plan orthogonal à l'axe (Oz).

Pour cela, on sélectionne parmi les images de la deuxième série d'images reconstruites utiles, celle associée à la position précise de la particule d'intérêt selon l'axe (Oz).

Sur cette image, on réalise un seuillage, pour obtenir une nouvelle image binaire. Ensuite, on relève les coordonnées du centre de l'objet binaire mis en évidence par le seuillage.

De nombreuses variantes peuvent être envisagées.

En particulier, on peut se placer dans le mode de réalisation tel que décrit ci-avant, dans lequel on a :

- $H(u,v,z) = \exp(i * 2 * \pi * z * w)$, avec $w = \sqrt{\frac{1}{\lambda^2} - u^2 - v^2}$, pour $u^2 + v^2 \leq \frac{1}{\lambda^2}$
- $H(u,v,z) = 0$ sinon.

On définit alors une image reconstruite utile comme étant le module au carré de l'image reconstruite correspondante.

Ensuite, on met en oeuvre des étapes similaires à celles décrites ci-avant, à la différence près que la recherche d'une position selon l'axe (Oz) met en oeuvre la recherche d'une image reconstruite utile présentant une valeur maximale d'écart-type.

Selon une autre variante, on se place dans le mode de réalisation tel que décrit ci-avant, dans lequel on a :

- $H(u,v,z) = \exp(i * 2 * \pi * z * w)$, avec $w = \sqrt{\frac{1}{\lambda^2} - u^2 - v^2}$, pour $u^2 + v^2 \leq \frac{1}{\lambda^2}$
- $H(u,v,z) = 0$ sinon.

On définit alors chaque image reconstruite utile comme étant le module au carré de l'image reconstruite correspondante.

On forme ensuite une image des gradients telle que définie ci-avant, et on en déduit, par seuillage, les positions approchées des particules biologiques, dans un plan orthogonal à l'axe (Oz). L'image obtenue ici par seuillage est nommée première image seuillée. On définit ainsi notamment la position approchée de la particule d'intérêt, dans un plan orthogonal à l'axe (Oz).

Sur la première image seuillée, on choisit arbitrairement un premier objet binaire associé à une particule biologique. On définit une première région d'intérêt recevant ce seul objet binaire.

Ensuite, on sélectionne une région correspondant à cette première région d'intérêt, dans chaque image reconstruite utile. A partir de la série d'images de la première région d'intérêt ainsi réalisée, on recherche la position selon l'axe (Oz) de l'image présentant une valeur maximale d'écart-type. Cette position définit une position approchée de la particule d'intérêt, selon l'axe (Oz), en supposant que toutes les particules biologiques sont situées sensiblement dans un même plan orthogonal à l'axe (Oz).

Ensuite, on revient à l'image des gradients et on forme une deuxième image seuillée, avec un seuil supérieur au seuil utilisé pour former la première image seuillée (par exemple 1,5 fois supérieur). Sur la deuxième image seuillée, on définit la particule d'intérêt en choisissant arbitrairement un deuxième objet binaire. Par recherche du centre de ce deuxième objet binaire, on en déduit la position précise de la particule d'intérêt, dans un plan orthogonal à l'axe (Oz).

A partir de cette deuxième image seuillée, on définit une deuxième région d'intérêt recevant ce seul deuxième objet binaire. Ensuite, on sélectionne une région correspondant à cette deuxième région d'intérêt, dans chaque image reconstruite utile. A partir de la série d'images ainsi réalisée, on recherche la position selon l'axe (Oz) de l'image présentant une valeur maximale d'écart-type. Cette position définit une position précise de la particule d'intérêt, selon l'axe (Oz).

La figure 8 est utilisée pour illustrer un cas particulier de l'invention. On se réfère aux références numériques de la figure 1.

Pour déterminer la distance entre la particule d'intérêt et le point de repère, selon un axe parallèle à l'axe 135, on calcule la distance selon cet axe, entre la particule d'intérêt et le plan de mise au point associé à l'image de référence.

En pratique, le calcul permet de déterminer la valeur absolue de la distance, selon un axe parallèle à l'axe 135, entre la particule d'intérêt et le plan de mise au point associé à l'image de référence. On choisit ensuite l'un ou l'autre signe connaissant le montage expérimental.

Par exemple,

- si le point de repère est situé au-dessus de l'interface supérieure 117, et
- si le plan de mise au point associé à l'image de référence est situé au-dessus de l'interface supérieure 117,
- alors on sait que la particule d'intérêt est sous le plan de mise au point associé à l'image de référence.

Lorsqu'il n'est pas possible de déterminer avec certitude le signe de cette distance, on peut utiliser un profil selon l'axe (Oz) relatif à la partie réelle des images reconstruites. On se place alors dans le mode de réalisation tel que décrit ci-avant, dans lequel on a :

$$H(u, v, z) = exp\big[-|z| * Im\big(p(u, v)\big) + i * z * Re\big(p(u, v)\big)\big]$$

En particulier, on peut mettre en oeuvre les étapes suivantes :

- à partir de la série d'images reconstruites, on détermine une série d'images secondaires, chaque image secondaire étant formée par la partie réelle d'une image reconstruite correspondante ;
- de la même façon qu'à la sous-étape 72 illustrée en figure 7, on transforme la série d'images secondaires (matrice à trois dimensions), en une matrice à deux dimensions, dont une dimension correspond aux pixels, et l'autre dimension correspond à un décalage selon l'axe (Oz).
- dans ladite matrice à deux dimensions, on sélectionne les pixels présentant un fort gradient d'intensité selon l'axe (Oz). On définit ainsi un gradient moyen associé à ces pixels. C'est ce gradient qui est illustré en figure 8. L'axe des abscisses est un décalage selon l'axe (Oz), en particulier un décalage du plan de mise au point relativement à la position du plan de mise au point associée à l'image de référence. L'axe des ordonnées se rapporte à la partie réelle des images secondaires.
- en fonction de la forme du profil, on détermine le signe de la distance, selon un axe parallèle à l'axe 135, entre la particule d'intérêt et le plan de mise au point associé à l'image de référence :
- si on passe, pour une abscisse croissante, d'un maximum positif à un minimum négatif (cas de la figure 8), l'image de référence est au-dessus du plan de mise au point (dans le sens de propagation de la lumière),
- si on passe, pour une abscisse croissante, d'un minimum négatif à un maximum positif (cas contraire de la figure 8), l'image de référence est au-dessous du plan de mise au point (dans le sens de propagation de la lumière).

De nombreuses variantes peuvent être envisagées sans sortir du cadre de la présente invention. Par exemple, l'étape de construction numérique d'une série d'images reconstruites pourra mettre en oeuvre d'autres opérateurs de propagation que ceux cités en exemple. La série d'images reconstruites pourra également être exploitée de différentes façons, pour en déduire la distance entre le plan de mise au point associé à l'image de référence, et la particule d'intérêt.

## Revendications

1. Procédé d'analyse d'un échantillon (111; 311) recevant des particules biologiques (112), parmi lesquelles une particule d'intérêt (112A), l'échantillon étant disposé entre une première source lumineuse (120 ; 320) et un système optique (131; 331), le système optique (131; 133) réalisant une conjugaison optique entre un plan de mise au point (133 ; 333) et un plan image dans lequel est situé un capteur d'image (132 ; 332), et l'échantillon étant situé à l'intérieur d'une chambre fluidique délimitée du côté du capteur d'image par une lame supérieure (114; 314), le procédé comprenant les étapes suivantes :

    - définition d'un point de repère (118 ; 318), situé sur une face (117 ; 317 ; 315) de ladite lame supérieure (114; 314), et illumination du point de repère (118 ; 318) par un faisceau laser (363) focalisé par le système optique (131 ; 331) et arrangé de sorte que le capteur d'image (132 ; 332) reçoive l'image d'une tache formée par la réflexion spéculaire du faisceau laser (363) sur la lame supérieure (114 ; 314), le faisceau laser, le capteur d'image et le système optique sont arrangés de telle sorte que le point de focalisation du faisceau soit dans le plan de mise au point ;
    - ajustement d'une distance, selon un axe parallèle à l'axe optique du système optique, entre l'échantillon situé dans sa chambre fluidique et le système optique par repérage de la réflexion spéculaire, de sorte que le point de repère soit positionné dans le plan de mise au point du système optique ;
    - décalage du plan de mise au point (133 ; 333) du système optique relativement au point de repère (118 ; 318), selon un axe parallèle à l'axe optique du système optique, d'une distance connue dite distance utile (D1), et de sorte à placer la particule d'intérêt (112A) hors du plan de mise au point (133 ; 333) du système optique ;
- à l'aide de la première source lumineuse, illumination d'une région recevant la particule d'intérêt, dite région illuminée (119) ;
- à l'aide du capteur d'image (132 ; 332), acquisition d'une image holographique de la région illuminée, dite image de référence ou image défocalisée ;
- à partir de l'image de référence, construction numérique d'une série d'images reconstruites, associées chacune à une simulation d'un décalage prédéterminé ($Di_1$, $Di_2$, $Di_n$, $Di_1$, $Di_{-n}$) du plan de mise au point le long de l'axe optique dudit système optique ;
- à partir de la série d'images reconstruites, détermination de la distance ($D_{ref}$) selon un axe parallèle à l'axe optique du système optique, entre la particule d'intérêt et ledit plan de mise au point.

2. Procédé d'analyse selon la revendication 1, **caractérisé en ce que** le décalage du plan de mise au point (133; 333) du système optique relativement au point de repère (118 ; 318) est mis en oeuvre par une translation d'un support (110) recevant l'échantillon dans sa chambre fluidique, relativement au système optique (131; 331).

3. Procédé d'analyse selon la revendication 1 ou 2, **caractérisé en ce qu'**il comporte une détermination de la distance ($D_F$) entre la particule d'intérêt et ledit point de repère (118 ; 318), à partir de ladite distance ($D_{ref}$) entre la particule d'intérêt (112A) et ledit plan de mise au point (133 ; 333) ainsi que de ladite distance utile (D1).

4. Procédé d'analyse selon l'une quelconque des revendications 1 à 3, **caractérisé en ce qu'**il comporte une détermination de la présence de ladite particule d'intérêt dans le milieu à partir de la distance entre ladite particule d'intérêt et ledit plan de mise au point (Dref).

5. Procédé d'analyse selon l'une des revendications 1 à 4, **caractérisé en ce que** les particules biologiques (112) adhèrent sur une interface (116, 117 ; 316, 317) de l'échantillon, constituée d'une interface inférieure (116 ; 316) ou supérieure (117 ; 317) de l'échantillon.

6. Procédé d'analyse selon l'une des revendications 1 à 5, **caractérisé en ce que** la distance selon un axe parallèle à l'axe optique du système optique, entre la position du plan de mise au point associée à l'image de référence, et la projection du point de repère (118 ; 318) selon cet axe et sur une interface supérieure (117 ; 317) de l'échantillon, est comprise entre +5 $\mu$m et +2000 $\mu$m ou entre -5 $\mu$m et - 2000 $\mu$m, l'interface supérieure (117 ; 317) étant définie par la frontière entre la lame supérieure (114) et l'échantillon (111).

7. Procédé d'analyse selon l'une quelconque des revendications 1 à 6, **caractérisé en ce qu'**il comprend en outre une détermination, à partir de ladite série d'images reconstruites, de la position de la particule d'intérêt (112A ; 312A) dans un plan orthogonal à l'axe optique du système optique.

8. Procédé d'analyse selon la revendication 3 **caractérisé en ce que** chaque image reconstruite est formée par une partie réelle et une partie imaginaire, et **en ce que** parmi les parties réelles et imaginaires, seules les parties imaginaires des images reconstruites sont utilisées pour déterminer la distance ($D_F$) selon un axe parallèle à l'axe optique du système optique, entre la particule d'intérêt (112A ; 312A) et le point de repère (118 ; 318).

9. Procédé d'analyse selon l'une des revendications 1 à 8, **caractérisé en ce que** chaque image reconstruite est associée à un décalage le long de l'axe optique (135 ; 335) du système optique et à une valeur d'un paramètre utile, de manière à constituer une fonction décrivant l'évolution du paramètre utile selon ledit décalage, et **en ce que** la détermination de la distance ($D_{ref}$) entre la particule (112A, 312A) et le plan de mise au point (133, 333) met en oeuvre une recherche d'une valeur remarquable, en particulier un extremum, un point d'inflexion ou un passage par zéro de ladite fonction.

10. Procédé d'analyse selon l'une quelconque des revendications 1 à 9, dans lequel que la détermination de la distance ($D_{ref}$) entre la particule d'intérêt (112A ; 312A) et le plan de mise au point (133 ; 333) comprend les sous-étapes suivantes :

- à partir d'une première série d'images reconstruites associée à un premier pas des décalages simulés du plan de mise au point (133 ; 333), détermination d'une distance approchée entre la particule d'intérêt et ledit plan de mise au point ;
- à partir d'une deuxième série d'images reconstruites associée à un deuxième pas des décalages simulés du plan de mise au point (133), le deuxième pas étant plus fin que le premier pas, détermination d'une distance précise entre la particule d'intérêt et ledit plan de mise au point.

11. Procédé d'analyse selon l'une quelconque des revendications 1 à 10, **caractérisé en ce qu'**à partir de la distance ($D_{ref}$) entre la particule d'intérêt (112A, 312) et ledit plan de mise au point (133, 333), le système optique (131, 331) est déplacé par rapport à ladite particule d'intérêt (112A, 312A) de façon à focaliser un faisceau laser d'analyse (363) sur la particule d'intérêt (112A ; 312A).

12. Procédé d'analyse selon l'une quelconque des revendications 1 à 11, **caractérisé en ce qu'**à partir de ladite distance ($D_{ref}$) entre la particule d'intérêt (112A, 312) et ledit plan de mise au point (133, 333), le système optique (131, 331) est déplacé par rapport à ladite particule d'intérêt (112A, 312A) de façon à ajuster la focalisation du capteur optique (132 ; 332) situé dans le plan image dudit système optique .

13. Procédé d'analyse selon l'une quelconque des revendications 1 à 12, **caractérisé en ce qu'**il comprend en outre une étape de comptage du nombre de particules biologiques (112) présentes dans l'échantillon (111 ; 311).

14. Procédé d'analyse selon l'une quelconque des revendications 1 à 13, **caractérisé en ce que** les particules biologiques (112) consistent en des bactéries, des spores, des cellules, des levures ou des micro-organismes.

15. Dispositif (100 ; 300) d'analyse d'un échantillon (111 ; 311) recevant des particules biologiques (112), parmi lesquelles une particule d'intérêt (112A; 312A), le dispositif comprenant :

- une première source lumineuse (120 ; 320) ;
- un ensemble d'imagerie (130 ; 330) comprenant un système optique (131 ; 331) et un capteur d'image (132 ; 332), tels que le capteur d'image se trouve dans un plan image du système optique, ledit plan image étant le conjugué, par le système optique, d'un plan de mise au point (133, 333);
- un support (110) adapté à recevoir une chambre fluidique recevant l'échantillon, disposé entre la première source lumineuse et l'ensemble d'imagerie, une lame supérieure (114 ; 314) délimitant la chambre fluidique ;
- un laser (360), agencé pour émettre un faisceau laser (363) focalisé par le système optique (131 ; 331), et de sorte que le capteur d'image (132 ; 332) reçoive l'image d'une tache formée par la réflexion spéculaire du faisceau laser (363) sur la lame supérieure (114 ; 314), le faisceau laser, le capteur d'image et le système optique sont arrangés de telle sorte que le point de focalisation du faisceau soit dans le plan de mise au point ;
- des moyens de translation (140 ; 340), adaptés à déplacer le support (110) relativement au système optique (131 ; 331), selon un axe parallèle à l'axe optique (135 ; 335) du système optique ; et
- des moyens de calculs (150 ; 350) arrangés pour mettre en oeuvre les étapes de la revendication 1, et en particulier :

- reliés à une mémoire (151 ; 351) stockant une information relative à un point de repère (118 ; 318) situé sur une face (117 ; 317 ; 315) de la lame supérieure (114 ; 314) ;
- configurés pour identifier une position relative de l'échantillon et du système optique, dans laquelle le capteur d'image (132 ; 332) reçoit l'image d'une tache formée par la réflexion spéculaire du faisceau laser (363) sur le point de repère ;
- recevant en entrée une image holographique acquise par le capteur d'image, dite image de référence lorsque ledit plan de mise au point est décalé par rapport audit point de repère ;
- adaptés à réaliser, à partir de l'image de référence, une construction numérique d'une série d'images reconstruites, associées chacune à une simulation d'un décalage prédéterminé ($Di_1$; $Di_2$; $Di_n$; $Di_{-1}$; $Di_{-n}$) du plan de mise au point le long de l'axe optique du système optique ; et
- fournissant en sortie la distance ($D_{ref}$) selon un axe parallèle à l'axe optique (135 ; 335) du système optique, entre la particule d'intérêt (112A ; 312A) et le plan de mise au point (133 ; 333).

**Patentansprüche**

1. Verfahren zur Analyse einer Probe (111 ; 311), die biologische Teilchen (112) aufnimmt, darunter ein Teilchen von Interesse (112A), wobei die Probe zwischen einer ersten Lichtquelle (120; 320) und einem optischen System (131; 331) angeordnet ist, wobei das optische System (131; 133) eine optische Konjugation zwischen einer Objektebene (133; 333) und einer Bildebene durchführt, in welcher sich ein Bildsensor (132; 332) befindet, und wobei sich die Probe innerhalb einer Fluidkammer befindet, die auf der Seite des Bildsensors von einer oberen Platte (114; 314) eingegrenzt wird, wobei das Verfahren die nachstehenden Schritte umfasst:

- Definieren eines Bezugspunktes (118; 318), der auf einer Seite (117; 317; 315) der oberen Platte (114; 314) liegt, und Ausleuchten des Bezugspunkts (118; 318) mit einem Laserstrahl (363), der von dem optischen System (131; 331) fokussiert wird und so ausgelegt ist, dass der Bildsensor (132; 332) das Bild eines Fleckens empfängt, der durch Spiegelreflexion des Laserstrahls (363) auf der oberen Platte (114; 314) gebildet wird, wobei der Laserstrahl, der Bildsensor und das optische System so ausgelegt sind, dass der Fokussierungspunkt des Strahls in der Objektebene liegt;
- Einstellen eines Abstands entlang einer parallel zur optischen Achse des optischen Systems verlaufenden Achse, zwischen der sich in ihrer Fluidkammer befindlichen Probe und dem optischen System, durch Bestimmen der Spiegelreflexion, so dass der Bezugspunkt in der Objektebene des optischen Systems positioniert wird;
- Verschieben der Objektebene (133; 333) des optischen Systems relativ zum Bezugspunkt (118; 318), entlang einer parallel zur optischen Achse des optischen Systems verlaufenden Achse, um einen bekannten Abstand, Nutzabstand (D1) genannt, so dass das Teilchen von Interesse (112A) aus der Objektebene (133; 333) des optischen Systems heraus positioniert wird;
- Ausleuchten eines Bereichs, der das Teilchen von Interesse aufnimmt, Ausleuchtbereich (119) genannt, mittels der ersten Lichtquelle;
- Erfassen eines holographischen Bildes des Ausleuchtbereichs, Referenzbild bzw. Defokussierungsbild genannt, mittels des Bildsensors (132; 332);
- digitales Konstruieren einer Reihe von rekonstruierten Bildern ausgehend von dem Referenzbild, die jeweils einer Simulation einer vorbestimmten Verschiebung ($Di_1$, $Di_2$, $Di_n$, $Di_1$, $Di_{-n}$) der Objektebene entlang der optischen Achse des optischen Systems zugeordnet sind;
- Ermitteln des Abstands ($D_{ref}$) entlang einer parallel zur optischen Achse des optischen Systems verlaufenden Achse, zwischen dem Teilchen von Interesse und der Objektebene, ausgehend von der Reihe von rekonstruierten Bildern.

2. Analyseverfahren nach Anspruch 1, **dadurch gekennzeichnet, dass** das Verschieben der Objektebene (133; 333) des optischen Systems relativ zum Bezugspunkt (118; 318) durch eine Translation eines die Probe in ihrer Fluidkammer aufnehmenden Trägers (110) relativ zum optischen System (131; 331) erfolgt.

3. Analyseverfahren nach Anspruch 1 oder 2, **dadurch gekennzeichnet, dass** es ein Ermitteln des Abstands ($D_F$) zwischen dem Teilchen von Interesse und dem Bezugspunkt (118; 318) ausgehend von dem Abstand ($D_{ref}$) zwischen dem Teilchen von Interesse (112A) und der Objektebene (133; 333) sowie von dem Nutzabstand (D1) umfasst.

4. Analyseverfahren nach einem der Ansprüche 1 bis 3, **dadurch gekennzeichnet, dass** es ein Ermitteln des Vorhandenseins von dem Teilchen von Interesse in dem Medium ausgehend von dem Abstand zwischen dem Teilchen von Interesse und der Objektebene ($D_{ref}$) umfasst.

5. Analyseverfahren nach einem der Ansprüche 1 bis 4, **dadurch gekennzeichnet, dass** die biologischen Teilchen (112) an einer Grenzfläche (116, 117; 316, 317) der Probe anhaften, die aus einer unteren (116; 316) oder oberen Grenzfläche (117; 317) der Probe besteht.

6. Analyseverfahren nach einem der Ansprüche 1 bis 5, **dadurch gekennzeichnet, dass** der Abstand, entlang einer parallel zur optischen Achse des optischen Systems verlaufenden Achse, zwischen der Position der dem Referenzbild zugeordneten Objektebene und der Projektion des Bezugspunkts (118; 318) entlang dieser Achse auf eine obere Grenzfläche (117; 317) der Probe, zwischen +5 $\mu$m und +2000 $\mu$m oder zwischen -5 $\mu$m und -2000 $\mu$m beträgt, wobei die obere Grenzfläche (117; 317) durch die Grenze zwischen der oberen Platte (114) und der Probe (111) definiert ist.

7. Analyseverfahren nach einem der Ansprüche 1 bis 6, **dadurch gekennzeichnet, dass** es ferner ein Ermitteln der Position des Teilchens von Interesse (112A; 312A) in einer orthogonal zur optischen Achse des optischen Systems verlaufenden Ebene ausgehend von der Reihe von rekonstruierten Bildern umfasst.

8. Analyseverfahren nach Anspruch 3, **dadurch gekennzeichnet, dass** jedes rekonstruierte Bild aus einem reellen Teil und einem imaginären Teil gebildet ist und dass aus den reellen und imaginären Teilen nur die imaginären Teile der rekonstruierten Bilder dazu verwendet werden, um den Abstand ($D_F$) entlang der parallel zur optischen Achse des optischen Systems verlaufenden Achse zwischen dem Teilchen von Interesse (112A; 312A) und dem Bezugspunkts (118; 318) zu ermitteln.

9.  Analyseverfahren nach einem der Ansprüche 1 bis 8, **dadurch gekennzeichnet, dass** jedes rekonstruierte Bild einer Verschiebung entlang der optischen Achse (135; 335) des optischen Systems und einem Wert eines Nutzparameters zugeordnet wird, so dass eine Funktion gebildet wird, welche den Verlauf des Nutzparameters gemäß der Verschiebung beschreibt, und dass das Ermitteln des Abstands ($D_{ref}$) zwischen dem Teilchen (112A, 312A) und der Objektebene (133, 333) eine Suche nach einem maßgeblichen Wert, insbesondere einem Extremum, einem Wendepunkt oder einem Nulldurchgang der Funktion, umfasst.

10. Analyseverfahren nach einem der Ansprüche 1 bis 9, wobei das Ermitteln des Abstands ($D_{ref}$) zwischen dem Teilchen von Interesse (112A; 312A) und der Objektebene (133; 333) die nachstehenden Unterschritte umfasst:

    - Ermitteln eines näherungsweisen Abstands zwischen dem Teilchen von Interesse und der Objektebene ausgehend von einer ersten Reihe von rekonstruierten Bildern, die einem ersten Teilungsabstand der simulierten Verschiebungen der Objektebene (133; 333) zugeordnet ist;
    - Ermitteln eines genauen Abstands zwischen dem Teilchen von Interesse und der Objektebene ausgehend von einer zweiten Reihe von rekonstruierten Bildern, die einem zweiten Teilungsabstand der simulierten Verschiebungen der Objektebene (133) zugeordnet ist, wobei der zweite Teilungsabstand feiner als der erste Teilungsabstand ist.

11. Analyseverfahren nach einem der Ansprüche 1 bis 10, **dadurch gekennzeichnet, dass** ausgehend von dem Abstand ($D_{ref}$) zwischen dem Teilchen von Interesse (112A, 312) und der Objektebene (133, 333) das optische System (131, 331) bezüglich des Teilchens von Interesse (112A, 312A) so verlagert wird, dass ein Analyselaserstrahl (363) auf das Teilchen von Interesse (112A; 312A) fokussiert wird.

12. Analyseverfahren nach einem der Ansprüche 1 bis 11, **dadurch gekennzeichnet, dass** ausgehend von dem Abstand ($D_{ref}$) zwischen dem Teilchen von Interesse (112A, 312) und der Objektebene (133, 333) das optische System (131, 331) bezüglich des Teilchens von Interesse (112A, 312A) so verlagert wird, dass die Fokussierung des optischen Sensors (132; 332), der in der Bildebene des optischen Systems liegt, eingestellt wird.

13. Analyseverfahren nach einem der Ansprüche 1 bis 12, **dadurch gekennzeichnet, dass** es ferner einen Schritt des Zählens der Anzahl von in der Probe (111 ; 311) vorhandenen biologischen Teilchen (112) umfasst.

14. Analyseverfahren nach einem der Ansprüche 1 bis 13, **dadurch gekennzeichnet, dass** die biologischen Teilchen (112) aus Bakterien, Sporen, Zellen, Hefen oder Mikroorganismen bestehen.

15. Vorrichtung (100; 300) zur Analyse einer Probe (111 ; 311), die biologische Teilchen (112) aufnimmt, darunter ein Teilchen von Interesse (112A; 312A), wobei die Vorrichtung enthält:

    - eine erste Lichtquelle (120; 320);
    - eine Bildgebungseinheit (130; 330), die ein optisches System (131; 331) und einen Bildsensor (132; 332) enthält, derart, dass der Bildsensor sich in einer Bildebene des optischen Systems befindet, wobei die Bildebene die Konjugierte einer Objektebene (133, 333) durch das optische System ist;
    - einen Träger (110), der dazu ausgelegt ist, eine Fluidkammer aufzunehmen, die die Probe aufnimmt, und der zwischen der ersten Lichtquelle und der Bildgebungseinheit angeordnet ist, wobei eine obere Platte (114; 314) die Fluidkammer eingrenzt;
    - einen Laser (360), der dazu angeordnet ist, einen Laserstrahl (363) zu emittieren, der von dem optischen System (131; 331) fokussiert wird, so dass der Bildsensor (132; 332) das Bild eines Fleckens empfängt, das durch die Spiegelreflexion des Laserstrahls (363) auf der oberen Platte (114; 314) gebildet wird, wobei der Laserstrahl, der Bildsensor und das optische System so ausgelegt sind, dass der Fokussierungspunkt des Strahls in der Objektebene liegt;
    - Translationseinrichtungen (140; 340), die dazu geeignet sind, den Träger (110) relativ zum optischen System (131; 331) entlang einer parallel zur optischen Achse (135; 335) des optischen Systems verlaufenden Achse zu verlagern; und
    - Berechnungsmittel (150; 350), die dazu ausgelegt sind, die Schritte von Anspruch 1 auszuführen, und insbesondere:

        - mit einem Speicher (151; 351) verbunden sind, der eine Information über einen Bezugspunkt (118; 318) abspeichert, welcher auf einer Seite (117; 317; 315) der oberen Platte (114; 314) liegt;
        - dazu konfiguriert sind, eine relative Position der Probe und des optischen Systems zu identifizieren, in welcher der Bildsensor (132; 332) das Bild eines Fleckens empfängt, der durch die Spiegelreflexion des Laserstrahls (363) am Bezugspunkt gebildet wird;
- am Eingang ein holographisches Bild empfangen, Referenzbild genannt, das von dem Bildsensor erfasst wird, wenn die Objektebene bezüglich des Bezugspunkts verschoben wird;
- dazu geeignet sind, ausgehend von dem Referenzbild eine digitale Konstruktion einer Reihe von rekonstruierten Bildern auszuführen, die jeweils einer Simulation einer vorbestimmten Verschiebung ($Di_1$; $Di_2$; $Di_n$; $Di_{-1}$; $Di_{-n}$) der Objektebene entlang der optischen Achse des optischen Systems zugeordnet sind; und
- am Ausgang den Abstand ($D_{ref}$) entlang einer parallel zur optischen Achse (135; 335) des optischen Systems verlaufenden Achse, zwischen dem Teilchen von Interesse (112A; 312A) und der Objektebene (133; 333), liefern.

**Claims**

1. Method for analysing a sample (111; 311) receiving biological particles (112), among which a particle of interest (112A), wherein the sample is arranged between a first light source (120; 320) and an optical system (131; 331), the optical system (131; 331) carrying out an optical conjugation between an object plane (133; 333) and an image plane in which an image sensor (132; 332) is located, and wherein the sample is arranged inside a fluidic chamber delimited by an upper slide (114; 314) on the side of the image sensor, the method comprising the following steps:

   - defining a reference point (118; 318) located on a face (117; 317; 315) of said upper slide (114; 314), and illuminating the reference point (118; 318) with a laser beam (363) which is focused by the optical system (131; 331) and arranged in such a way that the image sensor (132; 332) receives the image of a spot formed by specular reflexion of the laser beam (363) on the upper slide (114; 314), wherein the laser beam, the image sensor and the optical system are arranged in such a way that the focalisation point of the beam is in the object plane;
   - adjusting a distance, along an axis parallel to the optical axis of the optical system, between the sample arranged in its fluidic chamber and the optical system, by identifying the specular reflexion and in such a way that the reference point is located in the object plane of the optical system;
   - offsetting the object plane (133; 333) of the optical system with respect to the reference point (118; 3185), along an axis parallel to the optical axis of the optical system, by a known distance named useful distance ($D1$), and so as to place the particle of interest (112A) outside the object plane (133; 333) of the optical system;
   - using the first light source, illuminating a region receiving the particle of interest, referred to as illuminated region (119);
   - using the image sensor (132; 332), acquiring a holographic image of the illuminated region, referred to as reference image or defocused image;
   - using the reference image, digital construction of a series of reconstructed images, each one associated with a simulation of a predetermined offset ($Di_1$, $Di_2$, $Di_n$, $Di_1$, $Di_{-n}$) of the object plane along the optical axis of said optical system;
   - using the series of reconstructed images, determining the distance ($D_{ref}$) along an axis parallel to the optical axis of the optical system, between the particle of interest and said object plane.

2. Method for analysis according to claim 1, **characterised in that** the offsetting of the object plane (133; 333) of the optical system with respect to the reference point (118; 318) is carried out by a translation of a support (110) receiving the sample in its fluidic chamber with respect to the optical system (131; 331).

3. Method for analysis according to claim 1 or 2, **characterised in that** it comprises a determining of the distance ($D_F$) between the particle of interest and said reference point (118; 318), using said distance ($D_{ref}$) between the particle of interest (112A) and said object plane (133; 333) as well as said useful distance ($D_1$).

4. Method for analysis according to any of claims 1 to 3, **characterised in that** it comprises a determining of the presence of said particle of interest in the medium using the distance between said particle of interest and said object plane ($D_{ref}$).

5. Method for analysis according to any of claims 1 to 4, **characterised in that** the biological particles (112) adhere to an interface (116, 117; 316, 317) of the sample, comprised of a lower interface (116; 316) or an upper interface (117; 317) of the sample.

6.  Method for analysis according to one of claims 1 to 5, **characterised in that** the distance along an axis parallel to the optical axis of the optical system, between the position of the object plane associated with the reference image, and the projection of the reference point (118; 318) along this axis and on an upper interface (117; 317) of the sample, is between +5 $\mu$m and +2000 $\mu$m or between -5 $\mu$m and -2000 $\mu$m, whereby the upper interface (117; 317) is defined by the boundary between the upper slide (114) and the sample (111).

7.  Method for analysis according to any of claims 1 to 6, **characterised in that** it comprises further a step of determining, using said series of reconstructed images, the position of the particle of interest (112A; 312A) in a plane orthogonal to the optical axis of the optical system.

8.  Method for analysis according to claim 3, **characterised in that** each reconstructed image is formed by a real part and an imaginary part, and **in that** among the real and imaginary parts, only the imaginary parts of the reconstructed images are used in order to determine the distance ($D_F$) along an axis parallel to the optical axis of the optical system, between the particle of interest (112A; 312A) and the reference point (118; 318).

9.  Method for analysis according to any of claims 1 to 8, **characterised in that** each reconstructed image is associated with an offset along the optical axis (135; 335) of the optical system and with a value of a useful parameter, so as to constitute a function that describes the change in the useful parameter according to said offset, and **in that** the determining of the distance ($D_{ref}$) between the particle (112A, 312A) and the object plane (133, 333) implements a search for a remarkable value, in particular an extremum, an inflection point or a passage through zero of said function.

10. Method for analysis according to any of claims 1 to 9, wherein the determining of the distance ($D_{ref}$) between the particle of interest (112A; 312A) and the object plane (133; 333) comprises the following sub-steps:

    - using a first series of reconstructed images associated with a first pitch of simulated offsets of the object plane (133; 333), determining an approximated distance between the particle of interest and said object plane;
    - using a second series of reconstructed images associated with a second pitch of simulated offsets of the object plane (133), with the second pitch being finer than the first pitch, determining a precise distance between the particle of interest and said object plane.

11. Method for analysis according to any of claims 1 to 10, **characterised in that** using the distance ($D_{ref}$) between the particle of interest (112A, 312) and said object plane (133, 333), the optical system (131, 331) is displaced with respect to said particle of interest (112A, 312A) so as to focus an analysis laser beam (363) on the particle of interest (112A; 312A).

12. Method for analysis according to any of claims 1 to 11, **characterised in that** using said distance ($D_{ref}$) between the particle of interest (112A, 312) and said object plane (133, 333), the optical system (131, 331) is displaced with respect to said particle of interest (112A, 312A) so as to adjust the focusing of the optical sensor (132; 332) located in the image plane of said optical system.

13. Method for analysis according to any of claims 1 to 12, **characterised in that** it further comprises a step of counting the number of biological particles (112) present in the sample (111; 311).

14. Method for analysis according to any of claims 1 to 13, **characterised in that** the biological particles (112) consist of bacteria, spores, cells, yeasts or micro-organisms.

15. Device (100; 300) for analysing a sample (111; 311) receiving biological particles (112), among which a particle of interest (112A; 312A), the device comprising:

    - a first light source (120; 320);
    - an imaging unit (130; 330) comprising an optical system (131; 331) and an image sensor (132; 332), such that the image sensor is located in an image plane of the optical system, said image plane being the conjugate, by the optical system, of an object plane (133, 333);
    - a support (110) adapted to receive a fluidic chamber which contains the sample, arranged between the first light source and the imaging unit, with an upper slide (114; 314) delimiting the fluidic chamber;
    - a laser (360), arranged to emit a laser beam (363) focused by the optical system (131; 331), and such that the image sensor (132; 332) receives the image of a spot formed by specular reflexion of the laser beam (363) on the upper slide (114; 314), wherein the laser beam, the image sensor and the optical system are arranged in such a way that the focalisation point of the beam is in the object plane;

- means for translation (140; 340), adapted to displace the support (110) with respect to the optical system (131; 331), along an axis parallel to the optical axis (135; 335) of the optical system; and
- calculation means (150; 350), arranged to implement the steps of claim 1, and in particular:

  - connected to a memory (151; 351) storing information relative to a reference point (118; 318) located on a face (117; 317; 315) of the upper slide (114; 314);
  - configured to identify a relative position of the sample and the optical system, in which the image sensor (132; 332) receives the image of a spot formed by specular reflexion of the laser beam (363) on the reference point;
  - receiving as input a holographic image acquired by the image sensor, referred to as reference image, when said object plane is offset with respect to said reference point;
  - adapted to carry out, using the reference image, a digital construction of a series of reconstructed images, each one associated with a simulation of a predetermined offset ($Di_1$; $Di_2$; $Di_n$; $Di_{-1}$; $Di_{-n}$) of the object plane along the optical axis of the optical system; and
  - supplying as output the distance ($D_{ref}$) along an axis parallel to the optical axis (135; 335) of the optical system, between the particle of interest (112A; 312A) and the object plane (133; 333).

FIG.1

FIG.2

FIG.3

FIG.4

FIG.5A          FIG.5B          FIG.5C

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YONG-SEOK CHOI et al.** Three-dimensional volumetric measurement of red blood cell motion using digital holographie microscopy. *APPLIED OPTICS,* 01 Juin 2009, vol. 48 (16), 2983-2990

- 3D Localization of weak scatterers in digital holographie microscopy using Rayleigh-Sommerfeld back-propagation. **WILSON.** OPTICS EXPRESS. 16 Juillet 2012, vol. 20, 16735-16744
- **LEE et al.** Holographie microscopy of holographically trapped three-dimensinal structures. *OPTICS EXPRESS,* 19 Février 2007, vol. 15, 1505-1512